(19) Europäisches Patentamt / European Patent Office / Office européen des brevets

(11) **EP 4 055 506 B1**

(12) **FASCICULE DE BREVET EUROPEEN**

(45) Date de publication et mention
de la délivrance du brevet:
**29.11.2023   Bulletin 2023/48**

(21) Numéro de dépôt: **20793012.4**

(22) Date de dépôt: **26.10.2020**

(51) Classification Internationale des Brevets (IPC):
**G06F 21/55** (2013.01)      **G06F 21/57** (2013.01)

(52) Classification Coopérative des Brevets (CPC):
**G06F 21/552; G06F 21/577**

(86) Numéro de dépôt international:
**PCT/EP2020/080058**

(87) Numéro de publication internationale:
**WO 2021/089357 (14.05.2021 Gazette 2021/19)**

(54) **DETECTION D'ATTAQUES A L'AIDE DE COMPTEURS DE PERFORMANCES MATERIELS**

ANGRIFFSERKENNUNG MITTELS HARDWARELEISTUNGSZÄHLER

ATTACK DETECTION USING HARDWARE PERFORMANCE COUNTERS

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité:  **07.11.2019   FR 1912532**

(43) Date de publication de la demande:
**14.09.2022   Bulletin 2022/37**

(73) Titulaires:
• **Electricité de France**
**75008 Paris (FR)**
• **CENTRE NATIONAL DE LA RECHERCHE**
**SCIENTIFIQUE (CNRS)**
**75016 Paris (FR)**

(72) Inventeurs:
• **LAAROUCHI, Youssef**
**78280 Guiyancourt (FR)**
• **BOURDON, Malcolm**
**78150 Le Chesnay (FR)**
• **KAANICHE, Mohamed**
**31300 Toulouse (FR)**
• **NICOMETTE, Vincent**
**31450 Pompertuzat (FR)**
• **ALATA, Eric**
**31520 Ramonville Saint-Agne (FR)**
• **MIGLIORE, Vincent**
**31520 Ramonville Saint-Agne (FR)**

(74) Mandataire: **Plasseraud IP**
**66, rue de la Chaussée d'Antin**
**75440 Paris Cedex 09 (FR)**

(56) Documents cités:
**US-A1- 2019 130 101**

• **WANG XUEYANG ET AL: "Malicious Firmware
Detection with Hardware Performance
Counters", IEEE TRANSACTIONS ON
MULTI-SCALE COMPUTING SYSTEMS, IEEE, vol.
2, no. 3, 1 juillet 2016 (2016-07-01) , pages 160-173,
XP011626497, DOI:
10.1109/TMSCS.2016.2569467**

## Description

## Domaine technique

L'invention relève du domaine de la cybersécurité.

Plus particulièrement, l'invention porte sur des procédés de surveillance d'une flotte d'objets connectés, des circuits de traitement configurés pour réaliser les étapes de tels procédés, des programmes informatiques comportant des instructions pour la mise en oeuvre de tels procédés, et des supports non-transitoires de stockage de données comprenant au moins une séquence d'instructions amenant un ordinateur à exécuter de tels programmes.

## Technique antérieure

Dans de nombreux domaines d'activité, des objets connectés peuvent être massivement déployés à travers une très large zone (à l'échelle par exemple d'un pays). Ces objets connectés sont généralement conçus pour exécuter un programme relativement simple et de ce fait disposent de peu de ressources.

Ces objets connectés sont également conçus pour communiquer avec des serveurs distants. Cette communication peut être ascendante pour faire remonter des informations, descendante pour recevoir des ordres ou des mises à jour ou bidirectionnelle pour englober les deux aspects précités. De plus, ces objets connectés peuvent également disposer de liens de communication vers des capteurs ou actionneurs locaux.

Ce type d'objet pourrait constituer une cible de choix pour divers attaquants voulant profiter des ressources ou informations que pourraient fournir de tels objets.

Une fois les objets déployés dans leurs environnements finaux (maison connectée, smart building, etc.), ils entrent en phase nominale de fonctionnement. Durant cette phase, les objets peuvent se faire attaquer à plusieurs niveaux. Les niveaux qui peuvent être vulnérables à une attaque informatique sont :

- une attaque au niveau du logiciel applicatif exécuté, et/ou
- une attaque au niveau du matériel, et/ou
- une attaque au niveau du système d'exploitation.

Les attaques au niveau du logiciel applicatif appartiennent à un type d'attaque assez classique et très répandu dans le monde informatique. Ce type d'attaque a pour caractéristique de s'étendre facilement et est donc très impactant pour une flotte d'objets. Pour contrer ce type d'attaque, il suffit d'installer un système de détection/remédiation adéquat au niveau du système d'exploitation pour y remédier. Ce type d'attaque n'apporte pas de verrous technologiques spécifiques, mais pour y pallier, nous faisons l'hypothèse dans la suite de ce document que le système d'exploitation n'est pas corrompu et exécute bien les instructions de détections/remédiation des attaques au niveau du logiciel applicatif.

Une attaque du matériel d'un objet connecté suppose dans un premier temps un accès physique à l'objet. Une fois cet accès physique garanti, l'attaquant doit procéder à une altération de l'objet ou de ses composants pour altérer son fonctionnement. L'altération peut conduire à un arrêt de fonctionnement (on parle alors d'attaque de déni de service), ou à un changement du comportement de l'objet. Le déni de service dans ce cas est assez facile à détecter, contrairement au changement de comportement de l'objet. Cependant, l'étendue des dégâts de ce type d'attaque sur une flotte d'objets reste limité vu qu'il faut intervenir sur chaque objet pour l'altérer.

Une attaque au niveau du système d'exploitation d'un objet connecté est complexe à gérer parce qu'elle affecte un composant logiciel généralement considéré de confiance dans les différents modèles de sécurité. En effet, le système d'exploitation héberge souvent les noyaux de confiance dans les systèmes informatiques.

Dans la littérature, peu de solutions permettent la détection de ce type d'attaques. Une des solutions possibles consiste à ajouter une couche logicielle au-dessous du système d'exploitation (appelé hyperviseur) qui contrôle l'exécution de ce dernier.

Dans ce contexte d'objets connectés aptes à communiquer notamment avec des serveurs distants, il peut être difficile de s'assurer que les objets connectés soient de confiance sans monopoliser leurs ressources de manière excessive.

De plus, selon le cas, même en cas de fonctionnement légitime de l'objet, le code du programme exécuté par l'objet n'est pas nécessairement connu d'un serveur central donné apte à communiquer avec l'objet. En effet, le fonctionnement de certains objets peut être par exemple personnalisable, par exemple par l'utilisateur de l'objet en fonction de l'environnement dans lequel l'objet est déployé.

Ainsi il est souhaitable de pouvoir détecter de potentielles attaques sur ces objets, qui altéreraient leur comportement, tout en utilisant peu de ressources des objets afin qu'ils puissent continuer à fournir leurs services, et ce sans nécessairement disposer du code de l'ensemble des programmes pouvant être légitimement exécutés sur ces objets.

Il existe plusieurs manières de vérifier à distance la bonne exécution d'un programme sur un système à faible capacité tel qu'un système embarqué ou un objet connecté.

Une solution connue est appelée « remote attestation » ou « attestation à distance » en français.

Le principe général du « remote attestation » (RA) est de s'assurer qu'un certain programme est bien présent en mémoire et s'est bien exécuté. Cette technique de défense est souvent divisée en deux groupes : le RA basé sur le matériel et le RA basé sur le logiciel.

Les techniques de « remote attestation » basées sur le matériel sont en général comparativement plus complètes et plus précises que d'autres solutions connues pour détecter des déviations du comportement prévu de l'objet. Cependant, ces techniques demandent une préparation significative en amont ainsi qu'un coût de déploiement particulièrement élevé. De plus, il est nécessaire d'adjoindre un module matériel dédié à l'objet, ce qui n'est pas toujours possible en pratique.

Concernant les solutions logicielles, celles-ci présentent en général un temps de réponse relativement précis. Les solutions logicielles demandent cependant une bonne préparation au préalable et nécessitent une parfaite connaissance du programme déployé sur les objets ainsi que les caractéristiques de celui-ci et de son exécution. De plus, les solutions logicielles utilisent une fraction importante des ressources de l'objet connecté, liée à l'établissement de communications fréquentes avec un serveur central aux fins d'effectuer les vérifications.

Certaines solutions se disent également hybrides dans le sens où les besoins matériels sont mineurs. Elles partagent donc des avantages et des inconvénients des deux mondes et gardent dans tous les cas la nécessité d'une bonne connaissance préalable du programme.

D'autres solutions s'appuient sur l'utilisation d'informations "matérielles" des objets connectés afin d'effectuer une détection d'anomalie à moindre coût sur une flotte d'objets déployés. Ces informations "matérielles", qui vont refléter d'une certaine manière le comportement du logiciel, peuvent être appelées Compteurs de Performance Matériels (CPM) en Français et sont habituellement désignées sous le nom Anglais : Hardware Performance Counters (HPCs).

Il existe plusieurs moyens de récupérer les CPM. Une solution consiste à utiliser des outils logiciels connus qui permettent de les récupérer comme PAPI ou perf_event. Une autre solution consiste à incorporer dans un autre logiciel une série d'instructions permettant de récupérer les CPM. Enfin il est également possible de créer un module noyau dédié permettant d'avoir accès aux CPM.

Cependant, le nombre de CPM est limité. Dans le cas où les CPM désignent des registres spécialisés d'un processeur, il n'est généralement possible d'en récupérer que 2 à 8 en même temps sur un total de 20 à plus d'une centaine d'évènements différents, dépendamment des processeurs choisis. Certains processeurs ne possèdent pas de tels compteurs mais de plus en plus de processeurs en possèdent.

Il est alors possible, après récupération des CPM comme indiqué ci-avant, d'intégrer dans le système d'exploitation de l'objet connecté des instructions pour créer un profil de l'évolution des CPM lors de l'exécution d'un programme puis vérifier le bon comportement des CPM à chaque exécution de ce programme.

Par exemple, il est possible de détecter une attaque particulière, préalablement identifiée, comme un accès direct en mémoire, un accès au flot de contrôle d'un programme, ou une attaque sur un programme spécifique.

Toutes les solutions précitées présentent l'inconvénient de consommer une fraction importante des ressources de l'objet connecté. De plus, les solutions précitées nécessitent de créer un modèle de l'application malveillante ou légitime pour ensuite détecter respectivement tout comportement ressemblant à une attaque connue ou tout comportement ne correspondant pas à une exécution légitime. Il faut donc soit créer une base de signature d'attaques soit exécuter le logiciel au préalable pendant une phase d'entrainement afin de créer un premier modèle qui pourra être amélioré par la suite. Certaines solutions, principalement celles basées sur un principe de signature, vont préciser quelles sont les compteurs qu'il faut récupérer dans leur cas précis.

Une autre solution est connue pour une application spécifique portant sur des PLC dans le contexte de systèmes cyber-physiques avec un programme qui demande une certaine régularité et répétition dans son exécution.

Cette solution consiste à récupérer régulièrement les CPM pour ensuite les analyser sous forme de séries temporelles sur des fenêtres glissantes. L'analyse des CPM en série temporelle peut se faire de plusieurs façons, en utilisant des statistiques descriptives sur les séries ou en utilisant des transformées de Fourier et en corrélant les différents résultats en fonction des compteurs. L'approche choisie dans cette solution concernant la détection d'anomalies, appelée « one-class SVM », permet de créer un premier modèle lors d'une phase d'entraînement et de détecter les déviations de ce modèle après cette phase d'entraînement.

Ainsi, il existe un besoin pour une méthode permettant de détecter un comportement malveillant d'un objet connecté, tout en utilisant peu de ressources des objets, et en s'affranchissant de la nécessité de modéliser au préalable un fonctionnement malveillant ou un fonctionnement légitime de l'objet connecté.

WANG XUEYANG ET AL: "Malicious Firmware Détection with Hardware Performance Counters", IEEE TRANSACTIONS ON MULTI-SCALE COMPUTING SYSTEMS, IEEE, vol. 2, no. 3, 1 juillet 2016 (2016-07-01), pages 160-173, XP011626497, DOI: 10.1109/TMSCS.2016.2569467 et US 2019/130101 A1 illustrent l'art antérieur.

**Résumé**

La présente divulgation vient améliorer la situation et vise notamment à surveiller une flotte d'objets connectés de manière agnostique du fonctionnement informatique des objets connectés en cas d'un fonctionnement légitime ou d'un fonctionnement malveillant.

Pour cela, il est proposé, selon un aspect, un procédé de surveillance d'une flotte d'objets connectés, lesquels sont équipés d'un matériel physique similaire comprenant un circuit de traitement comprenant un processeur connecté à une mémoire et à une interface de communication avec un réseau, le circuit de traitement comprenant une pluralité de compteurs de performance matériels (CPM) caractérisant un fonctionnement du circuit de traitement,

le procédé comprenant :

a) sélectionner au moins une partie de la pluralité de CPM,

b) lire de manière répétée, pour chaque objet connecté, les CPM sélectionnés de manière à obtenir, pour chaque CPM sélectionné de chaque objet connecté, une série temporelle de valeurs associées audit CPM et audit objet connecté,

c) pour chaque objet connecté, pour chaque série temporelle de valeurs obtenues, obtenir au moins un vecteur de valeurs statistiques sur la base de la série temporelle de valeurs, ledit vecteur de valeurs statistiques obtenu étant associé à ladite série temporelle de valeurs et audit objet connecté,

d) obtenir, pour chaque objet connecté, un score d'anormalité sur la base d'une comparaison des vecteurs de valeurs statistiques associés audit objet avec l'ensemble des vecteurs de valeurs statistiques, les scores d'anormalité étant indicatifs d'une déviation moyenne des vecteurs de valeurs statistiques associés audit objet par rapport à l'ensemble des vecteurs de valeurs statistiques, et

e) en cas de détection d'un score d'anormalité d'un objet connecté donné déviant au-delà d'un seuil prédéfini, détecter une anomalie de fonctionnement informatique dudit objet connecté donné.

Ainsi, grâce à l'application de l'algorithme de détection d'anomalie aux vecteurs de valeurs statistiques obtenus, il est possible de détecter de manière efficace des anomalies de fonctionnement informatique d'objets parmi une flotte d'objets connectés. Ces anomalies de fonctionnement constituent des indices permettant de présumer d'un dysfonctionnement de l'objet connecté, ce dysfonctionnement pouvant être accidentel ou révélateur d'un fonctionnement malveillant.

De plus, au niveau de chaque objet connecté, les ressources de calcul utilisées par le circuit de traitement pour mettre en oeuvre le procédé de l'invention peuvent être particulièrement minimisées par rapport à celles nécessaires pour appliquer l'une quelconque des méthodes connues.

En effet, seule la lecture répétée, pour chaque objet connecté, des valeurs associées aux CPM sélectionnés nécessite d'être effectuée par ledit objet connecté. Le traitement statistique, la mise en oeuvre de l'algorithme de détection d'anomalie et la détection de l'anomalie peuvent par exemple être effectués de manière centralisée par un serveur distant.

Par « matériel physique similaire », il est entendu que les objets connectés disposent tous d'un circuit de traitement identique en ce que chaque entité physique du circuit de traitement, par exemple le processeur, est identique pour tous les objets connectés et comprend notamment une même architecture microélectronique interne.

Par « une pluralité de compteurs de performance matériels (CPM) » il est entendu une pluralité de registres spécialisés, intégrés à un des éléments physiques du circuit de traitement, en l'espèce le processeur, la mémoire ou l'interface de communication réseau, pour compter un nombre d'activités d'un type prédéfini de fonctionnement micro-architectural ou architectural des éléments physiques du circuit de traitement et stocker ce nombre.

Dans un mode de réalisation, ladite au moins une partie de la pluralité de CPM sélectionnée comprend au moins un registre spécialisé du processeur.

Par exemple, sélectionner au moins une partie de la pluralité de CPM peut correspondre à sélectionner une partie des registres spécialisés du processeur.

Le matériel physique des différents objets connectés étant similaire, la pluralité de CPM est identique pour chaque objet connecté. De plus, la partie sélectionnée de la pluralité de CPM peut être identique pour chaque objet connecté.

La sélection d'un ensemble de CPM uniques peut être effectuée de manière arbitraire ou basée sur des résultats précédents de détection d'anomalie de fonctionnement informatique.

Par exemple, une sélection de combinaison de compteurs peut être étudiée et caractérisée en amont, pour chaque type de logiciel applicatif APP pouvant être exécuté par les objets connectés.

Les inventeurs ont pu constater que les CPM permettant de décrire des évènements liés au cache L1, à la prédiction de branches et aux différents cycles liés au processeur CPU peuvent être suffisants, seuls ou en combinaison, pour détecter des attaques informatiques. Les noms des CPM et leur disponibilité ne sont pas décrits plus en détail car ceux-ci peuvent différer en fonction du modèle et de l'architecture interne du processeur CPU considéré.

Dans un mode de réalisation, chaque série temporelle de valeurs comprend, pour une pluralité d'instants prédéfinis séparés d'un intervalle de temps constant, une valeur du CPM associé à ladite série temporelle de valeurs lue audit instant.

En effet, une lecture unique d'une valeur d'un CPM à un instant donné, non répétée dans le temps peut être suivie d'une écriture de ladite valeur dans une mémoire principale, sous la forme par exemple d'un fichier. Ladite valeur comprend des informations permettant de caractériser le fonctionnement du circuit de traitement. Ces informations sont toutefois limitées par la capacité mémoire du CPM, typiquement 32 ou 64 bits.

Lire les valeurs des CPM de manière répétée dans le temps permet de surmonter cette limitation. En effet, M lectures d'un CPM donné à M instants différents permettent chacune d'obtenir une valeur. Chacune des M lectures de ce CPM donné peut être suivie d'une écriture de ladite valeur dans une mémoire principale, par exemple sous la forme d'un fichier. L'intervalle temporel, ou pas de temps, entre deux lectures d'un CPM donné est prédéfini et peut être par exemple fixe. Par exemple, un pas de temps de l'ordre de 5 ou 10 secondes est généralement approprié dans de nombreux cas.

Il est ainsi possible de concaténer les M valeurs obtenues. Par exemple, chaque écriture peut être effectuée successivement dans le même fichier. Le résultat de la concaténation est une seule série temporelle de M valeurs. Ainsi, il est obtenu, pour chaque CPM sélectionné de chaque objet, une série temporelle de M valeurs, chaque valeur étant une valeur d'un CPM donné à un instant donné.

Comme précisé précédemment, pour chaque série temporelle de valeurs obtenue, un vecteur de valeurs statistiques est obtenu sur la base de la série temporelle de valeurs.

Dans un mode de réalisation, chaque vecteur de valeurs statistiques associé à une série temporelle de valeurs comprend une pluralité de statistiques descriptives de la série temporelle de valeurs.

Ainsi, chaque vecteur de valeurs statistiques comprend des valeurs statistiques liées uniquement à une série temporelle de valeurs. Par exemple, ces valeurs statistiques peuvent comprendre une valeur maximale, minimale, moyenne, médiane, un écart-type, etc. de la série temporelle de valeurs.

Dans un mode de réalisation, pour chaque objet connecté :

- une première série temporelle de valeurs est associée à un premier CPM,
- au moins une deuxième série temporelle de valeurs est associée à un deuxième CPM, et
- le vecteur de valeurs statistiques associé à la première série temporelle de valeurs comprend une pluralité de statistiques descriptives de la première série temporelle de valeurs et de ladite au moins une deuxième série temporelle de valeurs.

Ainsi, chaque vecteur de valeurs statistiques comprend des valeurs statistiques liées à une pluralité de séries temporelles de valeurs.

Dans un mode de réalisation, chaque CPM sélectionné est associé à un premier voisin et à un deuxième voisin, et pour chaque CPM sélectionné, le procédé comprend :

- obtenir une série temporelle de valeurs associées audit CPM,
- obtenir une première série temporelle de valeurs voisine associée audit premier voisin,
- obtenir une deuxième série temporelle de valeurs voisine associée audit deuxième voisin, et
- obtenir une première valeur statistique sur la base de la série temporelle de valeurs et de la première série temporelle de valeurs voisine,
- obtenir une deuxième valeur statistique sur la base de la série temporelle de valeurs et de la deuxième série temporelle de valeurs voisine, et
- le vecteur de valeurs statistiques associé à la série temporelle de valeurs comprend la première valeur statistique et la deuxième valeur statistique.

Ainsi, il est possible par exemple de considérer trois séries temporelles de valeurs A, B, C respectivement associées à un premier CPM, un deuxième CPM et un troisième CPM d'un même objet connecté. Un premier vecteur de valeurs statistiques, obtenu sur la base notamment de la série temporelle de valeurs A, peut comprendre notamment une moyenne, une covariance, etc. des séries temporelles de valeurs A et B. Un deuxième vecteur de valeurs statistiques, obtenu sur la base notamment de la série temporelle de valeurs B, peut comprendre notamment une moyenne, une covariance, etc. des séries temporelles de valeurs B et C. Un troisième vecteur de valeurs statistiques, obtenu sur la base notamment de la série temporelle de valeurs C, peut comprendre notamment une moyenne, une covariance, etc. des séries temporelles de valeurs A et C.

Dans un mode de réalisation, le procédé comprend en outre :

- standardiser chaque vecteur de valeurs statistiques obtenu pour obtenir un vecteur standardisé de valeurs statistiques.

Ainsi, par cette standardisation, chaque vecteur de valeurs statistiques dispose d'un poids relatif identique pour la mise en oeuvre de la détection d'un anomalie de fonctionnement informatique d'un objet connecté.

Comme précisé précédemment, les vecteurs de valeurs statistiques obtenus sont comparés de manière à obtenir, pour chaque objet connecté, un score d'anormalité.

Cette comparaison peut être par exemple mise en oeuvre par un algorithme de détection d'anomalie. Le principe d'un tel algorithme est de comparer le fonctionnement informatique de chaque objet connecté, tel que représenté par les vecteurs de valeurs statistiques associés aux séries temporelles de valeurs associées aux CPM sélectionnés de l'objet connecté, avec le fonctionnement informatique d'au moins un autre objet connecté.

Le résultat de cette comparaison est, pour chaque objet connecté, au moins un score d'anormalité associé à cet objet connecté.

Ce score d'anormalité est une valeur, par exemple numérique, indicative d'une déviation moyenne des vecteurs statistiques respectifs de cet objet connecté par rapport audit au moins un autre objet connecté.

On peut par exemple considérer N objets connectés.

L'algorithme de détection d'anomalie effectue ainsi une comparaison entre :

- d'une part, K vecteurs de valeurs statistiques associés à K séries temporelles de valeurs obtenues pour K CPM sélectionnés de l'objet connecté concerné, et
- d'autre part, (N-1)·K vecteurs de valeurs statistiques correspondant aux K vecteurs de valeurs statistiques associés à K séries temporelles de valeurs obtenues pour K CPM sélectionnés de chaque autre objet connecté.

Chacun des K vecteurs de valeurs statistiques peut être comparé séparément, en d'autres termes individuellement, avec les N-1 vecteurs de valeurs statistiques correspondants.

Ainsi, on obtient, pour chacun des K vecteurs de valeurs statistiques, un score d'anormalité distinct, soit un ensemble de K scores d'anormalité par objet connecté.

Alternativement, les K vecteurs de valeurs statistiques peuvent être comparés de manière groupée avec les (N-1)·K vecteurs de valeurs statistiques correspondants.

Ainsi, on obtient un unique score d'anormalité par objet connecté.

Dans un mode de réalisation, chaque objet connecté peut être associé à au moins deux voisins, et l'algorithme de détection d'anomalie compare, pour chaque objet connecté, le fonctionnement de cet objet connecté au fonctionnement de ses au moins deux voisins.

Le terme de « voisins » peut être défini de la manière suivante : en reprenant l'exemple précédent de N objets connectés, il est possible de lister les N objets connectés en les associant chacun, arbitrairement ou selon un critère prédéfini, à un numéro allant de 1 à N.

Ainsi, en considérant que chaque objet connecté a deux voisins :

- l'objet connecté associé au numéro 1 a pour voisins les objets connectés respectivement associés aux numéros N et 2,
- l'objet connecté associé au numéro 2 a pour voisins les objets connectés respectivement associés aux numéros 1 et 3,
- l'objet connecté associé au numéro 3 a pour voisins les objets connectés respectivement associés aux numéros 2 et 4,
- l'objet connecté associé au numéro N-1 a pour voisins les objets connectés respectivement associés aux numéros N-2 et N, et
- l'objet connecté associé au numéro N a pour voisins les objets connectés respectivement associés aux numéros N-1 et 1.

Dans un mode de réalisation, obtenir, pour chaque objet connecté, un score d'anormalité sur la base d'une comparaison des vecteurs de valeurs statistiques obtenus comprend :

- appliquer un algorithme de détection d'anomalie du type « Local Outlier Factor » aux vecteurs de valeurs statistiques obtenus.

Aux cours de premiers tests, un tel algorithme s'est révélé particulièrement adapté à la détection d'anomalies de fonctionnement informatique.

En effet, les tests ont notamment révélé qu'un tel algorithme permet de distinguer, parmi un groupe d'objets connectés ayant majoritairement un fonctionnement légitime, en l'occurrence consistant à transmettre périodiquement une information prédéfinie à un serveur distant, un groupe restreint d'objets connectés ayant un fonctionnement malveillant même si ce fonctionnement malveillant est subtil, en l'occurrence ne différant que par l'adresse du serveur distant.

Dans un mode de réalisation,

- obtenir, pour chaque objet connecté, un score d'anormalité sur la base d'une comparaison des vecteurs de valeurs statistiques associés audit objet avec l'ensemble des vecteurs de valeurs statistiques comprend :
- appliquer une analyse en composantes principales aux vecteurs de valeurs statistiques obtenus de manière à réduire d'au moins une dimension chaque vecteur de valeurs statistiques obtenu, et
- obtenir, pour chaque objet connecté, un score d'anormalité sur la base d'une comparaison des vecteurs de valeurs statistiques réduits d'au moins une dimension associés audit objet avec l'ensemble des vecteurs de valeurs statistiques réduits d'au moins une dimension.

L'analyse en composantes principales permet dans certaines applications de simplifier la détermination des scores d'anormalité en ne conservant que les informations pertinentes pour la détection d'anomalies de fonctionnement informatique.

La « détection d'un score d'anormalité d'un objet connecté donné déviant au-delà d'un seuil prédéfini » est à comprendre comme désignant par exemple l'obtention du résultat d'une comparaison du score d'anormalité d'un objet connecté donné avec une valeur seuil prédéfinie.

Dans un mode de réalisation, le procédé comprend en outre :

- pour chaque objet connecté, déterminer un score global d'anormalité sur la base des scores d'anormalité associés audit objet connecté, et
- la détection d'un score d'anormalité d'un objet connecté donné déviant au-delà d'un seuil prédéfini comprend une détection d'un score global d'anormalité dudit objet connecté donné déviant au-delà d'un seuil prédéfini.

Le score global d'anormalité est une valeur synthétisant les scores d'anormalité indicatifs du fonctionnement informatique d'un même objet connecté.

Dans un mode de réalisation, le score global d'anormalité d'un objet connecté est une somme des scores d'anormalité associés audit objet connecté.

Bien entendu, le score global d'anormalité d'un objet connecté peut être calculée d'une manière différente, par exemple par une somme pondérée des scores d'anormalité associés audit objet connecté.

Un autre aspect de l'invention est un circuit de traitement comprenant un processeur connecté à une mémoire et à au moins une interface de communication avec un environnement réseau d'une flotte d'objets connectés, le circuit de traitement étant configuré pour réaliser les étapes d'un procédé de surveillance précité.

Un autre aspect de l'invention est un programme informatique comportant des instructions pour la mise en oeuvre d'un procédé de surveillance précité, lorsque lesdites instructions sont exécutées par un processeur d'un circuit de traitement.

Un autre aspect de l'invention est un support non-transitoire de stockage de données, lisible par ordinateur, comprenant au moins une séquence d'instructions amenant un ordinateur à exécuter un programme exécutant les étapes d'un procédé de surveillance précité.

**Brève description des dessins**

D'autres caractéristiques, détails et avantages apparaîtront à la lecture de la description détaillée ci-après, et à l'analyse des dessins annexés, sur lesquels :

**Fig. 1**

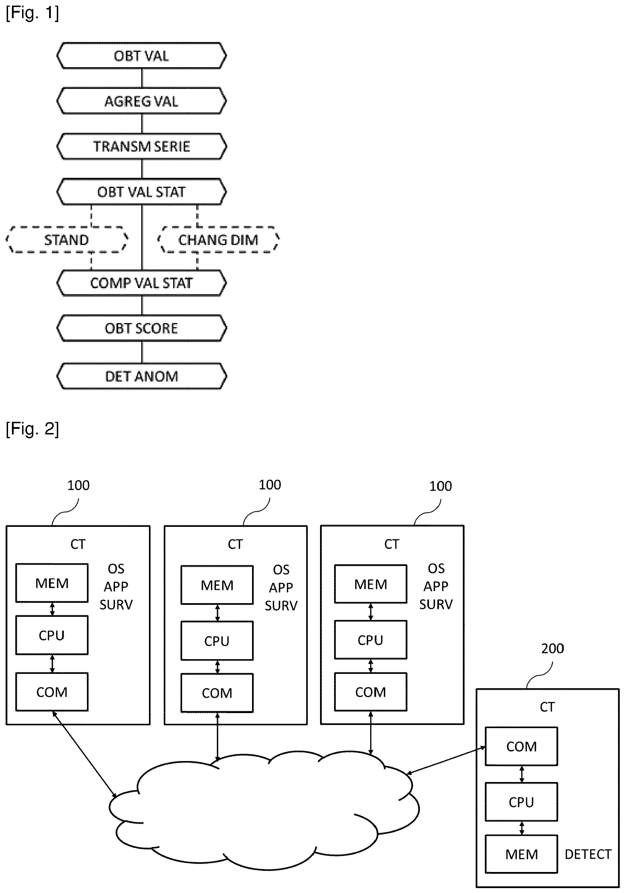

[Fig. 1] illustre un système, comprenant une flotte d'objets connectés et un serveur distant, dans un exemple de réalisation, dans lequel le procédé de surveillance est mis en oeuvre.

**Fig. 2**
[Fig. 2] illustre une forme d'ordinogramme d'un algorithme général d'un programme informatique, pour la mise en oeuvre du procédé proposé.

**Description des modes de réalisation**

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Il est maintenant fait référence à la [Fig. 1], qui représente un système comprenant une flotte d'objets connectés et un serveur distant dans un exemple de mode de réalisation.

Chaque objet connecté 100 est ici caractérisé par un matériel, un système d'exploitation OS et un logiciel applicatif APP qui est le même que les autres objets de la même flotte.

Le matériel de chaque objet connecté 100, également désigné sous les termes de circuit de traitement CT, comprend au moins :

- une mémoire MEM permettant de stocker notamment le système d'exploitation OS, le logiciel applicatif APP et un programme de surveillance SURV,
- un processeur CPU permettant d'exécuter notamment les instructions stockées dans la mémoire MEM, et
- une interface de communication réseau COM permettant d'échanger notamment des informations avec au moins un serveur distant 200 via un réseau.

Il est maintenant fait référence à la [Fig. 2], qui illustre une forme d'ordinogramme d'un algorithme général d'un programme informatique.

Afin de pouvoir vérifier à distance, par exemple depuis le serveur distant 200, la bonne cohérence d'exécution du logiciel applicatif APP déployé sur la flotte d'objets, le programme de surveillance SURV comprend une série d'instructions OBT VAL permettant, lorsqu'elles sont exécutées par le processeur CPU, de récupérer les valeurs de certaines caractéristiques matérielles et les stocker sur la mémoire MEM pendant l'exécution du logiciel applicatif APP.

A titre d'exemple, certains compteurs caractérisant le fonctionnement du CPU (processeur) ou de la mémoire peuvent être sélectionnés et ainsi faire partie de ces caractéristiques matérielles.

Le nombre des caractéristiques matérielles pouvant être sélectionnées ainsi que la fréquence de variation de leurs valeurs (habituellement de l'ordre de quelques millisecondes) impliquent que la gestion, en particulier l'exploitation, des valeurs stockées est complexe.

Dans la suite de ce document, les seules caractéristiques matérielles sélectionnées sont des compteurs de performance matériels (ou CPM) correspondant à des registres spécialisés du processeur CPU, donc liés au fonctionnement du processeur CPU.

Les valeurs des CPM peuvent être utilisées afin de :

- caractériser les conséquences de l'exécution du logiciel sur le matériel,
- puis analyser les valeurs des CPM de chaque objet connecté 100 pour déterminer les objets connectés 100 qui agissent anormalement par comparaison aux valeurs des CPM des autres objets connectés de la flotte.

En effet, sur des objets connectés, les inventeurs ont constaté qu'il est possible de réaliser des corrélations entre la valeur des compteurs CPM en fonction du temps, c'est-à-dire le comportement matériel du processeur CPU, et les instructions exécutées par le processeur CPU en fonction du temps, c'est-à-dire le comportement logiciel du circuit de traitement CT.

De plus, compte tenu de la similarité du matériel des objets connectés déployés, il est possible de détecter un comportement malveillant d'un objet connecté 100 en comparant le fonctionnement du matériel de cet objet connecté 100 par rapport à celui de l'ensemble de la flotte d'objets connectés.

La détection est particulièrement efficace dès lors que les comportements légitimes peuvent être représentés en nombre suffisant à travers l'évolution des CPM. Un exemple de comportement dit légitime correspond ici à l'exécution des instructions du logiciel applicatif APP par le processeur CPU. Ainsi, la finesse de la détection est optimale lorsque lesdites instructions sont à la fois suffisamment simples et répétitives pour que les caractéristiques des CPM précédemment cités soient faciles à exploiter.

Dans un mode de réalisation, la valeur courante de chaque CPM de chaque objet connecté 100 est récupérée et stockée sur la mémoire MEM de manière répétée dans le temps. Ainsi, pour chaque caractéristique matérielle, une suite de valeurs est obtenue. Chaque valeur correspond à un instant d'acquisition. Cette suite de valeurs forme ainsi une série temporelle de valeurs.

L'intervalle de temps entre deux instants d'acquisition consécutifs est par exemple de l'ordre de cinq secondes, de la dizaine de secondes ou de la minute, ce en fonction des performances souhaitées pour la détection. Les valeurs des CPM peuvent être enregistrées dans un fichier sécurisé afin de les communiquer plus tard. Par « fichier sécurisé », on peut entendre par exemple un fichier chiffré selon tout protocole de chiffrage connu, ou un fichier à accès restreint. Il peut être prévu une pluralité de fichiers, par exemple un fichier pour chaque CPM sélectionné de l'objet connecté 100, ou à l'inverse un unique fichier pour l'ensemble des CPM sélectionnés de l'objet connecté 100.

Plus la collecte du ou des fichiers est fréquente, plus précise sera l'évaluation de l'évolution de la valeur des CPM, et plus importante sera la consommation de ressources au niveau de l'objet pour réaliser cette récolte.

Par exemple, les valeurs ainsi couramment récupérées peuvent être écrites AGREG VAL, sous la forme d'une suite de valeurs dans un fichier stocké sur la mémoire MEM. Cette suite de valeurs constitue alors une série temporelle de valeurs. Ensuite, le ou les fichiers comprenant les séries temporelles de valeurs sont transmis TRANSM SERIE via l'interface de communication COM de l'objet connecté 100 vers un serveur distant 200.

Le serveur distant 200 comprend un circuit de traitement CT équipé d'une interface de communication COM avec chacun des objets connectés 100, d'un processeur CPU, et d'une mémoire MEM stockant les instructions d'un programme DETECT de détection d'anomalie.

Ainsi, il est possible de surveiller le fonctionnement d'un objet connecté 100 à distance tout en minimisant la fréquence des communications depuis l'objet connecté 100 vers le serveur distant 200 chargé de détecter une éventuelle anomalie de fonctionnement informatique sur la base des séries temporelles de valeurs.

La transmission desdits fichiers peut être effectuée par exemple par intervalles de l'ordre de la demi-heure. Un tel intervalle permet d'éviter de congestionner le réseau sur lequel les objets communiquent et de laisser les objets connectés 100 fournir leurs propres services par l'exécution du logiciel applicatif APP.

Il est également possible de sauvegarder un historique des dernières valeurs afin de lancer une analyse sur plusieurs fenêtres temporelles différentes et potentiellement améliorer la détection.

Après réception par le serveur central des séries temporelles de valeurs, celles-ci font l'objet d'un traitement statistique.

En effet, l'exploitation directe des valeurs de l'ensemble des CPM de chaque objet connecté 100 de la flotte d'objets connectés est complexe. Cette exploitation peut être simplifiée en opérant une réduction de l'espace de données utilisées.

Ainsi, le nombre de données relevées est réduit en transformant les séries temporelles de manière à obtenir OBT VAL STAT une pluralité de vecteurs de valeurs statistiques, chaque vecteur de valeur statistique étant associé à une série temporelle de valeurs.

Par « vecteur de valeurs statistiques représentatif d'une série temporelle de valeurs » est entendu un ensemble de valeurs statistiques, chaque valeur statistique étant représentative de la série temporelle de valeurs.

Les deux principaux types d'analyse statistique sont l'analyse de statistiques descriptives et l'analyse prédictive.

L'analyse de statistiques descriptives comprend des méthodes pour organiser et résumer les données collectées.

L'analyse prédictive est basée sur des méthodes permettant de tirer des conclusions sur les données collectées sur la base de l'évaluation d'un échantillon des données. Par exemple, des prédictions peuvent être établies pour l'ensemble des données. Un exemple de prédiction peut concerner la probabilité qu'un objet connecté présente une anomalie de fonctionnement informatique sur la base des données collectées. L'exploration de données pour des méthodes d'apprentissage automatique simple ou profond tel que par réseau de convolution peut être utilisée dans l'analyse prédictive. Selon une réalisation, les séries temporelles de valeurs obtenues peuvent être intégrées à une base de données de séries temporelles de valeurs de manière à améliorer continuellement la détection d'une anomalie de fonctionnement informatique d'un objet connecté.

Dans un exemple de réalisation, pour chaque série temporelle de valeurs, un vecteur de valeurs statistiques est obtenu, comprenant les statistiques descriptives suivantes :

- moyenne ;
- 1er et 3ème quartiles ;
- valeur médiane ;
- valeur maximum ;
- valeur minimum ; et
- écart-type.

Ces valeurs descriptives sont efficaces pour détecter des déviations modérées du programme, c'est-à-dire pour détecter une attaque qui crée une charge virale supplémentaire correspondant à un quart de la charge légitime. Il convient de noter qu'il est toujours possible de prendre d'autres valeurs à comparer.

Il peut être prévu que les vecteurs de valeurs statistiques comprennent des statistiques dont la nature diffère en fonction du CPM associé au vecteur de valeurs statistiques. Par exemple, la valeur médiane d'une première série temporelle de valeurs associées à un premier CPM peut être déterminée pour former un premier vecteur de valeurs statistiques associé à la première série temporelle de valeurs, alors qu'un deuxième vecteur de valeurs statistiques associé à une deuxième série temporelle de valeurs associées à un deuxième CPM peut ne pas comprendre de valeur médiane de la deuxième série temporelle de valeurs.

Après avoir obtenu pour chaque série temporelle de valeurs un vecteur de valeurs statistiques associé à ladite série temporelle de valeurs, les vecteurs de valeurs statistiques obtenus peuvent être transformés pour en faciliter la comparaison ultérieure.

Dans une réalisation, les vecteurs de valeurs statistiques obtenus sont standardisés STAND de manière à obtenir une pluralité de vecteurs standardisés de valeurs statistiques.

Par exemple, la flotte d'objets connectés peut comprendre N objets connectés 100. Chacun des N objets connectés 100 est équipé d'un circuit de traitement CT comprenant notamment un processeur CPU. Chacun de ces N processeurs CPU dispose d'une pluralité de K CPM sous la forme de registres spécialisés, qui sont identiques pour l'ensemble des N processeurs CPU.

Ainsi, K vecteurs de valeurs statistiques ($i,j$)

$$
\begin{array}{cccccc}
(1,1) & \ldots & (1,j) & \ldots & \ldots & (1,N) \\
\vdots & & \vdots & & & \vdots \\
(i,1) & \ldots & (i,j) & \ldots & \ldots & (i,N) \\
\vdots & & \vdots & & & \vdots \\
\vdots & & \vdots & & & \vdots \\
(K,1) & \ldots & (K,j) & \ldots & \ldots & (K,N)
\end{array}
$$

sont obtenus, chaque vecteur de valeurs statistiques (*i,j*) étant associé à un CPM (i) d'un objet connecté 100 (j), où i est un entier naturel compris entre 1 et K et j est un entier naturel compris entre 1 et N.

Les N vecteurs de valeurs statistiques (i,1), ..., (i,j), ..., (i,N) correspondant, pour chaque objet connecté 100, à un même CPM, sont alors standardisés de manière à ce que chacun des N vecteurs de valeurs statistiques (i,1), ..., (i,j), ..., (i,N) ait la même moyenne et le même écart-type.

Par exemple il est possible de récupérer, en tant que valeurs de CPM, le nombre de 'branch miss' et le nombre de 'cache L1 miss'.

Les vecteurs de valeurs statistiques associés au CPM 'cache L1 miss' peuvent être standardisés par exemple sur la base des moyennes des valeurs de 'cache L1 miss' de chaque objet connecté 100. Il peut être prévu de transformer les séries temporelles de valeurs associées au CPM 'cache L1 miss', par exemple par une transformation linéaire de chaque série temporelle de valeurs, de sorte que :

- la moyenne de chacune de ces séries temporelles de valeurs soit fixée égale à une première valeur prédéfinie, par exemple à 0, et
- l'écart-type de chacune de ces séries temporelles de valeurs soit fixé à une deuxième valeur prédéfinie, par exemple à 1.

Ainsi dans cet exemple, après standardisation des valeurs, la moyenne des moyennes des valeurs de 'cache L1 miss' sera de 0 et l'écart-type de 1. Cette standardisation permet que toutes les valeurs puissent être plus facilement comparables par l'algorithme de détection d'anomalie et que les échelles de valeurs ne favorisent pas une des valeurs comparées.

Ainsi, pour un même CPM, les échelles de valeurs sont harmonisées d'un objet connecté 100 à un autre. Les vecteurs de valeurs statistiques sont ainsi plus facilement comparables.

Dans une réalisation, les vecteurs de valeurs statistiques obtenus, ou le cas échéant les vecteurs standardisés obtenus, subissent un changement de dimension CHANG DIM de manière à obtenir une pluralité de vecteurs fils.

En effet, le phénomène connu sous le nom de "malédiction de la dimension" pourrait réduire l'efficacité de la détection si la dimension des vecteurs de valeurs statistiques est trop grande par rapport au nombre d'objets connectés 100.

Ce phénomène peut être surmonté ici en découpant les vecteurs de valeurs statistiques associés aux séries temporelles de valeurs des CPM d'un objet connecté 100 en plusieurs vecteurs fils.

Pour conserver une corrélation entre les différents compteurs, une possibilité est de regrouper dans un même vecteur fils les valeurs statistiques de même nature.

On peut considérer ici, dans un exemple de réalisation, que seules les valeurs de par exemple deux CPM sont collectées sous la forme de séries temporelles. Pour chacune de ces deux séries temporelles, un vecteur de valeurs statistiques est alors obtenu et comprend les statistiques descriptives suivantes :

- moyenne ;
- 1er et 3ème quartiles ;
- valeur médiane ;
- valeur maximum ;
- valeur minimum ; et
- écart-type.

Dans cet exemple, ces deux vecteurs de valeurs statistiques obtenus peuvent être découpés en sept vecteurs fils, chaque vecteur fils possédant une des statistiques descriptives précisée ci-avant pour chacun des deux CPM de l'objet : c'est-à-dire les moyennes des deux CPM, les écart-types des deux CPM, etc.

Les vecteurs de valeurs statistiques obtenus, ou le cas échéant les vecteurs standardisés obtenus, ou le cas échéant les vecteurs fils obtenus sont ensuite comparés COMP VAL STAT à l'aide d'un algorithme de détection d'anomalie.

L'algorithme de détection d'anomalie est conçu pour obtenir OBT SCORE, pour chacun des vecteurs, un score d'anormalité associé à ce vecteur. Ce score d'anormalité permet d'estimer si le vecteur présente une anomalie par rapport aux autres vecteurs ou non.

Un exemple d'un tel algorithme, dit 'Local Outlier Factor (LOF)' est basé sur la densité avec les plus proches voisins, c'est-à-dire la similitude d'un vecteur par rapport aux autres vecteurs les plus similaires.

Cet exemple d'algorithme est en outre non supervisé, c'est-à-dire qu'il ne nécessite ni entrainement ni suppositions sur les valeurs d'entrées.

Ainsi, plus un groupe de vecteurs présente de similitudes, plus les scores d'anormalité des vecteurs de ce groupe sont voisins. Ainsi, les vecteurs correspondant à des objets connectés 100 ayant tous un même fonctionnement informatique présentent un score d'anormalité voisin.

Il est possible sur la base des scores d'anormalité obtenus de :

- déterminer au moins un groupe de vecteurs similaires entre eux, et
- d'associer ce groupe de vecteurs similaires entre eux, ainsi que les objets connectés 100 respectivement auxdits vecteurs du groupe de vecteurs, à un comportement légitime.

Une hypothèse possible est de considérer que :

- les objets connectés ayant un fonctionnement légitime forment un groupe majoritaire parmi la flotte d'objets connectés, et
- parmi ce groupe majoritaire, les vecteurs correspondant respectivement à chacun des objets connectés 100 sont similaires.

Cette hypothèse est vérifiée si le logiciel applicatif APP est non personnalisable et que les instructions du logiciel applicatif APP sont suffisamment simples et répétitives. Ainsi, les CPM de chacun des objets connectés 100 du groupe majoritaire présentent une évolution similaire au fil du temps.

Une autre hypothèse possible est de considérer que :

- plusieurs fonctionnements légitimes peuvent être représentés parmi la flotte d'objets connectés,
- les objets connectés ayant un fonctionnement légitime forment un groupe majoritaire parmi la flotte d'objets connectés,
- parmi ce groupe majoritaire, les vecteurs correspondant respectivement à chacun des objets connectés 100 peuvent être divisés en sous-groupes de vecteurs similaires entre eux, et
- chaque sous-groupe correspond à un type de comportement légitime particulier.

Cette hypothèse est vérifiée si le logiciel applicatif APP est personnalisable de manière à ce qu'une série d'instructions puisse être sélectionnée parmi une liste prédéfinie de série d'instructions pour être exécutée par le processeur CPU. Ainsi, pour chaque fonctionnement légitime possible, un sous-groupe peut être formé au sein du groupe majoritaire.

Afin de sélectionner, parmi les vecteurs obtenus, un groupe de vecteurs similaires, il convient de définir :

- une valeur de référence correspondant par exemple à un score d'anormalité prédéfini, et
- au moins une valeur seuil correspondant à une déviation positive ou négative par rapport à la valeur de référence.

Dans un exemple de réalisation, on considère qu'on applique l'algorithme 'Local Outlier Factor' décrit ci-avant à chaque vecteur de valeurs statistiques obtenu, les vecteurs de valeurs statistiques étant chacun associé à une série temporelle de valeurs associée à un CPM d'un objet connecté.

Les scores d'anormalité obtenus pour chaque vecteur sont tous négatifs et ont une valeur maximale de -1. Cette valeur, asymptotique, est approchée par les vecteurs de valeurs statistiques présentant un maximum de similitudes avec les plus proches voisins. Moins un vecteur de valeurs statistiques présente de similitudes avec ses plus proches voisins, plus la valeur absolue du score d'anormalité associé à ce vecteur est élevée. Ainsi, la valeur de référence peut être fixée à -1 et il est possible de déterminer une valeur seuil, nécessairement inférieure à -1 dans cet exemple. Sur la base de cette valeur de référence et de cette valeur seuil il est possible de former un groupe de vecteurs similaires constitué de l'ensemble des vecteurs respectivement associés à un score d'anormalité compris entre -1 et ladite valeur seuil.

Il est en outre possible de réaliser la somme des scores d'anormalité associés aux vecteurs de valeurs statistiques chacun associé à une série temporelle comportant une série temporelle de valeurs associée à un CPM d'un même objet connecté 100. Pour chaque objet connecté 100, une somme de scores d'anormalité est ainsi définie et prend une valeur maximale de -K, où K est le nombre de CPM. Il est ainsi possible de définir une valeur de référence égale à -K et une valeur seuil inférieure à -K. Sur la base de cette valeur de référence et de cette valeur seuil il est possible de former un groupe d'objets connectés dont les vecteurs de valeurs statistiques sont similaires. Ce groupe d'objets connectés est constitué de l'ensemble des objets connectés respectivement associés à une somme de scores d'anormalité comprise entre -K et ladite valeur seuil.

Sur la base des groupes de vecteurs ainsi définis, il est possible de détecter DET ANOM une anomalie de fonctionnement informatique.

Par exemple, chaque vecteur isolé, ne faisant partie d'aucun groupe de vecteur défini ci-avant, peut être considéré comme une anomalie de fonctionnement informatique. Ainsi, il est possible de considérer que tout objet connecté 100 associé à un tel vecteur isolé présente une anomalie de fonctionnement informatique.

Pour ce qui est de la décision de considération des anomalies, celle-ci repose donc sur l'analyse des scores d'anormalité associés aux vecteurs associés aux différents objets connectés 100. En particulier, la décision de considération des anomalies repose sur la détermination d'une valeur seuil permettant de former un groupe de vecteurs considéré comme ayant un comportement similaire.

Chaque objet connecté 100 détecté comme ayant un comportement anormal peut alors par exemple faire l'objet d'une investigation plus profonde utilisant une autre technique et/ou une répétition du procédé de surveillance par exemple. Par exemple, il est possible de répéter le procédé de surveillance en sélectionnant d'autres CPM et/ou en modifiant l'intervalle de collecte des valeurs des CPM et/ou en intégrant des statistiques descriptives d'une nature différente dans les vecteurs de valeurs statistiques.

A la suite de la détection et/ou de la confirmation d'un comportement anormal, différentes réactions sont possibles et peuvent par exemple comprendre la déconnexion de l'objet connecté concerné. Ces réactions ne sont pas abordées plus en détail dans ce document.

La présente divulgation ne se limite pas aux exemples décrits ci-avant à l'appui des figures, seulement présentées à titre d'exemple aux fins de faciliter la compréhension de l'invention, mais elle englobe toutes les variantes que pourra envisager l'homme de l'art dans le cadre de la protection recherchée.

Notamment, en fonction du processeur utilisé, le nombre de CPM sélectionnés ainsi que leur nature ne seront pas exactement les mêmes. Afin de choisir les CPM à récupérer, une démarche possible est de repérer les CPM recouvrant le mieux les différentes parties et mécaniques des processeurs. Ce repérage peut être mis en oeuvre par exemple en simulant différents fonctionnements respectivement légitimes et malveillants de différents objets connectés et en sélectionnant différentes combinaisons de CPM.

Une fois les différentes combinaisons de CPM sélectionnées, un protocole de tests possible est détaillé ci-après : pour chaque combinaison de CPM sélectionnée,

- on obtient les séries temporelles de valeurs associées aux CPM sélectionnés,
- on obtient les vecteurs de valeurs statistiques sur la base de ces séries temporelles de valeurs,
- on applique l'algorithme de détection d'anomalie à ces vecteurs de valeurs statistiques pour obtenir une pluralité de scores d'anormalité, et
- on détecte des anomalies de fonctionnement informatique sur la base de ces scores d'anormalité.

La combinaison de CPM recouvrant le mieux les différentes parties et mécaniques des processeurs est celle présentant les meilleurs résultats, c'est-à-dire celle pour laquelle une anomalie de fonctionnement informatique est détectée pour un maximum d'objets présentant un fonctionnement malveillant et pour un minimum d'objets présentant un fonctionnement légitime.

## Revendications

1. Procédé de surveillance d'une flotte d'objets connectés, lesquels sont équipés d'un matériel physique similaire comprenant un circuit de traitement comprenant un processeur connecté à une mémoire et à une interface de communication avec un réseau, le circuit de traitement comprenant une pluralité de compteurs de performance matériels (CPM) caractérisant un fonctionnement du circuit de traitement, le procédé comprenant :

   a) sélectionner au moins une partie de la pluralité de CPM,
   b) lire de manière répétée, pour chaque objet connecté, les CPM sélectionnés de manière à obtenir, pour chaque CPM sélectionné de chaque objet connecté, une série temporelle de valeurs associées audit CPM et audit objet connecté,
   c) pour chaque objet connecté, pour chaque série temporelle de valeurs obtenues, obtenir au moins un vecteur de valeurs statistiques sur la base de la série temporelle de valeurs, ledit vecteur de valeurs statistiques obtenu étant associé à ladite série temporelle de valeurs et audit objet connecté,
   d) obtenir, pour chaque objet connecté, un score d'anormalité sur la base d'une comparaison des vecteurs de valeurs statistiques associés audit objet avec l'ensemble des vecteurs de valeurs statistiques, les scores d'anormalité étant indicatifs d'une déviation moyenne des vecteurs de valeurs statistiques associés audit objet par rapport à l'ensemble des vecteurs de valeurs statistiques, et

e) en cas de détection d'un score d'anormalité d'un objet connecté donné déviant au-delà d'un seuil prédéfini, détecter une anomalie de fonctionnement informatique dudit objet connecté donné.

2. Procédé de surveillance selon l'une des revendications précédentes, dans lequel le processeur comprend au moins un registre spécialisé et ladite au moins une partie de la pluralité de CPM sélectionnée comprend ledit au moins un registre spécialisé.

3. Procédé de surveillance selon l'une des revendications précédentes, dans lequel :

- chaque série temporelle de valeurs comprend, pour une pluralité d'instants prédéfinis séparés d'un intervalle de temps constant, une valeur du CPM associé à ladite série temporelle de valeurs lue audit instant.

4. Procédé de surveillance selon l'une des revendications précédentes, dans lequel :

- chaque vecteur de valeurs statistiques associé à une série temporelle de valeurs comprend une pluralité de statistiques descriptives de la série temporelle de valeurs.

5. Procédé de surveillance selon l'une des revendications précédentes, dans lequel, pour chaque objet connecté :

- une première série temporelle de valeurs est associée à un premier CPM,
- au moins une deuxième série temporelle de valeurs est associée à un deuxième CPM, et
- le vecteur de valeurs statistiques associé à la première série temporelle de valeurs comprend une pluralité de statistiques descriptives de la première série temporelle de valeurs et de ladite au moins une deuxième série temporelle de valeurs.

6. Procédé de surveillance selon l'une des revendications précédentes, dans lequel chaque CPM sélectionné est associé à un premier voisin et à un deuxième voisin, et pour chaque CPM sélectionné, le procédé comprend :

- obtenir une série temporelle de valeurs associées audit CPM,

- obtenir une première série temporelle de valeurs voisine associée audit premier voisin,
- obtenir une deuxième série temporelle de valeurs voisine associée audit deuxième voisin, et
- obtenir une première valeur statistique sur la base de la série temporelle de valeurs et de la première série temporelle de valeurs voisine,
- obtenir une deuxième valeur statistique sur la base de la série temporelle de valeurs et de la deuxième série temporelle de valeurs voisine, et
- le vecteur de valeurs statistiques associé à la série temporelle de valeurs comprend la première valeur statistique et la deuxième valeur statistique.

7. Procédé de surveillance selon l'une des revendications précédentes, dans lequel obtenir, pour chaque objet connecté, un score d'anormalité sur la base d'une comparaison des vecteurs de valeurs statistiques obtenus comprend :

- appliquer un algorithme de détection d'anomalie du type « facteur local aberrant » aux vecteurs de valeurs statistiques obtenus.

8. Procédé de surveillance selon l'une des revendications précédentes, comprenant :

- standardiser chaque vecteur de valeurs statistiques obtenu pour obtenir un vecteur standardisé de valeurs statistiques.

9. Procédé de surveillance selon l'une des revendications précédentes, dans lequel :

- appliquer un algorithme de détection d'anomalie aux vecteurs de valeurs statistiques obtenus comprend :
- appliquer une analyse en composantes principales aux vecteurs de valeurs statistiques obtenus de manière à obtenir une pluralité de vecteurs de valeurs statistiques réduits d'au moins une dimension, et
- appliquer l'algorithme de détection d'anomalie auxdits vecteurs de valeurs statistiques réduits d'au moins une dimension.

10. Procédé de surveillance selon l'une des revendications précédentes, dans lequel obtenir, pour chaque objet connecté, un score d'anormalité sur la base d'une comparaison des vecteurs de valeurs statistiques associés audit objet avec l'ensemble des vecteurs de valeurs statistiques comprend :

- appliquer une analyse en composantes principales aux vecteurs de valeurs statistiques obtenus de manière à réduire d'au moins une dimension chaque vecteur de valeurs statistiques obtenu, et

- obtenir, pour chaque objet connecté, un score d'anormalité sur la base d'une comparaison des vecteurs de valeurs statistiques réduits d'au moins une dimension associés audit objet avec l'ensemble des vecteurs de valeurs statistiques réduits d'au moins une dimension.

11. Procédé de surveillance selon l'une des revendications précédentes, comprenant en outre :

   - pour chaque objet connecté, déterminer un score global d'anormalité sur la base des scores d'anormalité associés audit objet connecté, et
   - la détection d'un score d'anormalité d'un objet connecté donné déviant au-delà d'un seuil prédéfini comprenant une détection d'un score global d'anormalité dudit objet connecté donné déviant au-delà d'un seuil prédéfini.

12. Procédé de surveillance selon la revendication précédente, dans lequel le score global d'anormalité d'un objet connecté est une somme des scores d'anormalité associés audit objet connecté.

13. Circuit de traitement comprenant un processeur connecté à une mémoire et à au moins une interface de communication avec un environnement réseau d'une flotte d'objets connectés, le circuit de traitement étant configuré pour réaliser les étapes d'un procédé de surveillance selon l'une des revendications 1 à 12.

14. Programme informatique comportant des instructions pour la mise en oeuvre d'un procédé de surveillance selon l'une des revendications 1 à 12, lorsque lesdites instructions sont exécutées par un processeur d'un circuit de traitement.

15. Support non-transitoire de stockage de données, lisible par ordinateur, comprenant au moins une séquence d'instructions amenant un ordinateur à exécuter un programme exécutant les étapes d'un procédé de surveillance selon l'une des revendications 1 à 12.

**Patentansprüche**

1. Verfahren zur Überwachung einer Gruppe von verbundenen Objekten, die mit ähnlicher physischer Hardware ausgestattet sind, umfassend eine Verarbeitungsschaltung, die einen Prozessor umfasst, der mit einem Speicher und einer Kommunikationsschnittstelle mit einem Netzwerk verbunden ist, wobei die Verarbeitungsschaltung eine Vielzahl von Hardware-Leistungszählern (CPM) umfasst, die eine Funktion der Verarbeitungsschaltung charakterisieren,

wobei das Verfahren umfasst:

   a) Auswählen wenigstens eines Teils der Vielzahl von CPMs,
   b) wiederholtes Lesen der ausgewählten CPMs für jedes verbundene Objekt, um für jeden ausgewählten CPM jedes verbundenen Objekts eine Zeitreihe von Werten zu erhalten, die dem CPM und dem verbundenen Objekt zugeordnet sind,
   c) für jedes verbundene Objekt, für jede Zeitreihe von erhaltenen Werten, Erhalten wenigstens eines Vektors statistischer Werte auf der Grundlage der Zeitreihe von Werten, wobei der erhaltene Vektor statistischer Werte der Zeitreihe von Werten und dem verbundenen Objekt zugeordnet ist,
   d) für jedes verbundene Objekt Erhalten einer Abnormitätsbewertung auf der Grundlage eines Vergleichs der Vektoren statistischer Werte, die dem Objekt zugeordnet sind, mit allen Vektoren statistischer Werte, wobei die Abnormitätsbewertungen eine mittlere Abweichung der dem Objekt zugeordneten Vektoren statistischer Werte in Bezug auf alle Vektoren statistischer Werte anzeigen, und
   e) im Falle der Erfassung einer Abnormalitätsbewertung eines bestimmten verbundenen Objekts, die über einen vordefinierten Schwellenwert hinausgeht, Erfassen einer Anomalie des Computerbetriebs des gegebenen verbundenen Objekts.

2. Überwachungsverfahren nach einem der vorhergehenden Ansprüche, wobei der Prozessor wenigstens ein spezialisiertes Register umfasst und der wenigstens eine Teil der ausgewählten Vielzahl von CPMs das wenigstens eine spezialisierte Register umfasst.

3. Überwachungsverfahren nach einem der vorhergehenden Ansprüche, wobei:

   - jede Zeitreihe von Werten für eine Vielzahl von vordefinierten Zeitpunkten, die durch ein konstantes Zeitintervall getrennt sind, einen CPM-Wert umfasst, der der Zeitreihe von Werten zugeordnet ist, die zu dem Zeitpunkt gelesen wurden.

4. Überwachungsverfahren nach einem der vorhergehenden Ansprüche, wobei:

   - jeder Vektor statistischer Werte, der einer Zeitreihe von Werten zugeordnet ist, eine Vielzahl von Statistiken umfasst, die die Zeitreihe von Werten beschreiben.

**5.** Überwachungsverfahren nach einem der vorhergehenden Ansprüche, wobei für jedes verbundene Objekt:

- eine erste Zeitreihe von Werten einem ersten CPM zugeordnet wird,
- wenigstens eine zweite Zeitreihe von Werten einem zweiten CPM zugeordnet wird, und
- der Vektor der statistischen Werte, der der ersten Zeitreihe von Werten zugeordnet ist, eine Vielzahl von Statistiken umfasst, die die erste Zeitreihe von Werten und die wenigstens eine zweite Zeitreihe von Werten beschreiben.

**6.** Überwachungsverfahren nach einem der vorhergehenden Ansprüche, wobei jeder ausgewählte CPM einem ersten Nachbarn und einem zweiten Nachbarn zugeordnet wird und das Verfahren für jeden ausgewählten CPM umfasst:

- Erhalten einer Zeitreihe von Werten, die dem CPM zugeordnet sind,
- Erhalten einer ersten Zeitreihe von Nachbarwerten, die dem ersten Nachbarn zugeordnet ist,
- Erhalten einer zweiten Zeitreihe von Nachbarwerten, die dem zweiten Nachbarn zugeordnet sind, und
- Erhalten eines ersten statistischen Wertes auf der Grundlage der Zeitreihe von Werten und der ersten benachbarten Zeitreihe von Werten,
- Erhalten eines zweiten statistischen Wertes auf der Grundlage der Zeitreihe von Werten und der zweiten benachbarten Zeitreihe von Werten, und
- wobei der Vektor der statistischen Werte, der der Zeitreihe von Werten zugeordnet ist, den ersten statistischen Wert und den zweiten statistischen Wert umfasst.

**7.** Überwachungsverfahren nach einem der vorhergehenden Ansprüche, wobei das Erhalten einer Abnormalitätsbewertung für jedes verbundene Objekt auf der Grundlage eines Vergleichs der erhaltenen Vektoren statistischer Werte umfasst:

- Anwenden eines Algorithmus zur Erkennung von Anomalien des Typs "abweichender lokaler Faktor" auf die erhaltenen Vektoren statistischer Werte.

**8.** Überwachungsverfahren nach einem der vorhergehenden Ansprüche, umfassend:

- Standardisieren jedes erhaltenen Vektors statistischer Werte, um einen standardisierten Vektor statistischer Werte zu erhalten.

**9.** Überwachungsverfahren nach einem der vorhergehenden Ansprüche, wobei:

- das Anwenden eines Anomalieerkennungsalgorithmus auf die erhaltenen Vektoren statistischer Werte umfasst:
- Anwenden einer Hauptkomponentenanalyse auf die erhaltenen Vektoren statistischer Werte, um eine Vielzahl von Vektoren statistischer Werte zu erhalten, die um wenigstens eine Dimension reduziert sind; und
- Anwenden des Anomalieerkennungsalgorithmus auf die um wenigstens eine Dimension reduzierten Vektoren statistischer Werte.

**10.** Überwachungsverfahren nach einem der vorhergehenden Ansprüche, wobei das Erhalten einer Abnormalitätsbewertung für jedes verbundene Objekt auf der Grundlage eines Vergleichs der Vektoren statistischer Werte, die dem Objekt zugeordnet sind, mit der Gesamtheit der Vektoren statistischer Werte umfasst:

- Anwenden einer Hauptkomponentenanalyse auf die erhaltenen Vektoren statistischer Werte, um jeden erhaltenen Vektor statistischer Werte um wenigstens eine Dimension zu reduzieren, und
- für jedes verbundene Objekt Erhalten eines Abnormalitätswerts auf der Grundlage eines Vergleichs der um wenigstens eine Dimension reduzierten Vektoren statistischer Werte, die dem Objekt zugeordnet sind, mit der Gesamtheit der um wenigstens eine Dimension reduzierten Vektoren statistischer Werte.

**11.** Überwachungsverfahren nach einem der vorhergehenden Ansprüche, ferner umfassend:

- für jedes verbundene Objekt Bestimmen einer Gesamtabnormalitätsbewertung auf der Grundlage der Abnormalitätsbewertungen, die dem verbundenen Objekt zugeordnet sind, und
- Erfassen einer Abnormalitätsbewertung eines gegebenen verbundenen Objekts, die über einen vordefinierten Schwellenwert hinausgeht, umfassend das Erfassen einer Gesamtabnormalitätsbewertung des gegebenen verbundenen Objekts, die über einen vordefinierten Schwellenwert hinausgeht.

**12.** Überwachungsverfahren nach dem vorhergehenden Anspruch, wobei die Gesamtabnormalitätsbewertung eines verbundenen Objekts eine Summe der Abnormalitätsbewertungen ist, die dem verbundenen Objekt zugeordnet sind.

**13.** Verarbeitungsschaltung, umfassend einen Prozessor, der mit einem Speicher und wenigstens einer Schnittstelle zur Kommunikation mit einer Netzwerkumgebung einer Gruppe von verbundenen Objekten verbunden ist, wobei die Verarbeitungsschaltung dazu ausgebildet ist, die Schritte eines Überwachungsverfahrens nach einem der Ansprüche 1 bis 12 durchzuführen.

14. Computerprogramm, umfassend Anweisungen zum Ausführen eines Überwachungsverfahrens nach einem der Ansprüche 1 bis 12, wenn die Anweisungen von einem Prozessor einer Verarbeitungsschaltung ausgeführt werden.

15. Computerlesbares, nicht-transitorisches Datenspeichermedium, umfassend wenigstens eine Anweisungssequenz, die einen Computer dazu veranlasst, ein Programm auszuführen, das die Schritte eines Überwachungsverfahrens nach einem der Ansprüche 1 bis 12 ausführt.

## Claims

1. A method for monitoring a fleet of connected objects, which are equipped with a similar physical hardware comprising a processing circuit comprising a processor connected to a memory and to an interface for communicating with a network, the processing circuit comprising a plurality of hardware performance counters (HPC) characterising an operation of the processing circuit,
the method comprising:

   a) selecting at least one part of the plurality of HPCs,
   b) repeatedly reading, for each connected object, the HPCs selected so as to obtain, for each HPC selected of each connected object, a time series of values associated with said HPC and with said connected object,
   c) for each connected object, for each time series of values obtained, obtaining at least one vector of statistical values based on the time series of values, said vector of statistical values obtained being associated with said time series of values and with said connected object,
   d) obtaining, for each connected object, an abnormality score based on a comparison of the vectors of statistical values associated with said object with all the vectors of statistical values, the abnormality scores being indicative of a mean deviation of the vectors of statistical values associated with said object relative to all the vectors of statistical values, and
   e) in case of detection of an abnormality score of a given connected object deviating beyond a predefined threshold, detecting an anomaly of computing operation of said given connected object.

2. The monitoring method according to one of the preceding claims, wherein the processor comprises at least one specialised register and said at least one part of the plurality of HPCs selected comprises said at least one specialised register.

3. The monitoring method according to one of the preceding claims, wherein:

   - each time series of values comprises, for a plurality of predefined time instants separated by a constant time interval, a value of the HPC associated with said time series of values read at said time instant.

4. The monitoring method according to one of the preceding claims, wherein:

   - each vector of statistical values associated with a time series of values comprises a plurality of descriptive statistics of the time series of values.

5. The monitoring method according to one of the preceding claims, wherein, for each connected object:

   - a first time series of values is associated with a first HPC,
   - at least a second time series of values is associated with a second HPC, and
   - the vector of statistical values associated with the first time series of values comprises a plurality of descriptive statistics of the first time series of values and of said at least second time series of values.

6. The monitoring method according to one of the preceding claims, wherein each HPC selected is associated with a first neighbour and with a second neighbour, and for each HPC selected, the method comprises:

   - obtaining a time series of values associated with said HPC,
   - obtaining a first neighbouring time series of values associated with said first neighbour,
   - obtaining a second neighbouring time series of values associated with said second neighbour, and
   - obtaining a first statistical value based on the time series of values and on the first neighbouring time series of values,
   - obtaining a second statistical value based on the time series of values and on the second neighbouring time series of values, and
   - the vector of statistical values associated with the time series of values comprises the first statistical value and the second statistical value.

7. The monitoring method according to one of the preceding claims, wherein obtaining, for each connected object, an abnormality score based on a comparison of the vectors of statistical values obtained comprises:

- applying an "aberrant local factor" type anomaly detection algorithm to the vectors of statistical values obtained.

8. The monitoring method according to one of the preceding claims, comprising:

- standardising each vector of statistical values obtained to obtain a standardised vector of statistical values.

9. The monitoring method according to one of the preceding claims, wherein:

- applying an anomaly detection algorithm to the vectors of statistical values obtained comprises:
- applying a principal component analysis to the vectors of statistical values obtained so as to obtain a plurality of vectors of statistical values reduced by at least one dimension, and
- applying the anomaly detection algorithm to said vectors of statistical values reduced by at least one dimension.

10. The monitoring method according to one of the preceding claims, wherein obtaining, for each connected object, an abnormality score based on a comparison of the vectors of statistical values associated with said object with all the vectors of statistical values comprises:

- applying a principal component analysis to the vectors of statistical values obtained so as to reduce by at least one dimension each vector of statistical values obtained, and
- obtaining, for each connected object, an abnormality score based on a comparison of the vectors of statistical values reduced by at least one dimension associated with said object with all the vectors of statistical values reduced by at least one dimension.

11. The monitoring method according to one of the preceding claims, further comprising:

- for each connected object, determining an overall abnormality score based on the abnormality scores associated with said connected object, and

- detecting an abnormality score of a given connected object deviating beyond a predefined threshold comprising detecting an overall abnormality score of said given connected object deviating beyond a predefined threshold.

12. The monitoring method according to the preceding claim, wherein the overall abnormality score of a connected object is a sum of the abnormality scores associated with said connected object.

13. A processing circuit comprising a processor connected to a memory and to at least one interface for communicating with a network environment of a fleet of connected objects, the processing circuit being configured to carry out the steps of a monitoring method according to one of claims 1 to 12.

14. A computing programme including instructions for implementing a monitoring method according to one of claims 1 to 12, when said instructions are executed by a processor of a processing circuit.

15. A computer-readable non-transient data storage medium comprising at least one sequence of instructions causing a computer to execute a programme executing the steps of a monitoring method according to one of claims 1 to 12.

[Fig. 1]

[Fig. 2]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019130101 A1

**Littérature non-brevet citée dans la description**

- Malicious Firmware Détection with Hardware Performance Counters. **WANG XUEYANG et al.** IEEE TRANSACTIONS ON MULTI-SCALE COMPUTING SYSTEMS. IEEE, 01 Juillet 2016, vol. 2, 160-173